# EUROPÄISCHE PATENTANMELDUNG

(11) **EP 4 201 894 A1**
(43) Veröffentlichungstag der Anmeldung: **28.06.2023**
(21) Anmeldenummer: 22211621.2
(22) Anmeldetag: 06.12.2022
(51) Int. Cl.: C02F 1/68, C02F 5/02, C02F 5/04

(54) **VORRICHTUNG UND VERFAHREN ZUR ANREICHERUNG VON WASSER MIT SILIZIUM UND/ODER PHOSPHAT**

(30) Priorität: 23.12.2021 DE 102021134546
(71) Anmelder: BWT Holding GmbH, 5310 Mondsee (AT)
(72) Erfinder: Johann, Jürgen, 69226 Nußloch (DE); Schrotshammer, Christian, 5310 Mondsee (AT); Mairhofer, Anton, 4893 Zell am See (AT); Wendtner, Rafael, 5161 Elixhausen (AT)
(74) Vertreter: Friderichs, Gunther

(57) **Zusammenfassung**

Die Offenbarung betrifft eine Vorrichtung zur Wasserbehandlung, insbesondere zur Anreicherung von Wasser mit Silizium und/oder Dosierung von Phosphat. Die Vorrichtung umfassend eine Kartusche mit einem Eingang und einem Ausgang, welche mit einem Phosphat und/oder Silikat befüllt ist. Weiter umfasst die Vorrichtung eine Heizeinrichtung zum Erwärmen des Phosphats oder Silikats.

## Beschreibung

### Gebiet der Erfindung

Die Erfindung betrifft eine Vorrichtung sowie ein Verfahren zur Wasserbehandlung, wobei das Wasser mit Silizium angereichert und/oder Phosphat in das Wasser dosiert wird. Insbesondere betrifft die Erfindung eine Vorrichtung und eine Verfahren zum Korrosionsschutz und/oder zur Verhinderung der Steinbildung eines Installationssystems und/oder eines Warmwasserbereiters.

### Hintergrund der Erfindung

Die Offenlegungsschrift EP 3 808 875 A1 zeigt eine Inhibitorenlösung zum Korrosionsschutz. Über eine Dosierpumpe wird dem Eingangswasser eine Lösung zugesetzt, welche Silikat und Phosphat enthält. Aus diesen Komponenten bildet sich ein Schutzfilm entlang der Wand von Metallrohren.

Derartige flüssige Lösungen haben den Nachteil, dass diese im Vergleich zu Feststoffen schwerer handhabbar sind. Weiter ist eine Dosierpumpe erforderlich, über die mit recht hoher Genauigkeit die Menge an zugeführter Inhibitorenlösung eingestellt werden muss.

Die Offenlegungsschrift WO 2021/105177 A1 zeigt eine Vorrichtung, welche eine Kartusche umfasst, die mit einem sich relativ gut lösenden Silikat befüllt ist. Über eine derartige Kartusche lässt sich zumindest Silizium dem Wasser zusetzen.

Das Silizium kann dabei sowohl als Mineralstoff für die menschliche Ernährung als auch als Korrosionsschutz dienen.

Die Bereitstellung von Phosphat zum Korrosionsschutz ist allerdings mit diesem System nicht möglich.

### Aufgabe der Erfindung

Der Erfindung liegt demgegenüber die Aufgabe zugrunde, Silizium und/oder Phosphat als Feststoff bereitzustellen, wobei die Abgabe von Silizium und/oder Phosphat an das zu behandelnde Wasser verbessert werden soll.

### Zusammenfassung der Erfindung

Die Aufgabe der Erfindung wird bereits durch eine Vorrichtung sowie ein Verfahren zur Wasserbehandlung nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Vorrichtung zur Wasserbehandlung. Insbesondere betrifft die Erfindung eine Vorrichtung zur Anreicherung von Wasser mit Silizium und/oder eine Vorrichtung zur Zudosierung von Phosphat für den Korrosionsschutz und /oder Kalkschutz eines Installationssystems und/oder eines Warmwasserbereiters.

Die Vorrichtung umfasst eine, vorzugsweise austauschbare, Kartusche mit einem Eingang und einem Ausgang, welche mit einem Phosphat oder Silikat befüllt ist, das als Feststoff vorliegt.

Gemäß der vorliegenden Erfindung umfasst die Vorrichtung eine Heizeinrichtung zum Erwärmen des Phosphats oder Silikats.

Es hat sich herausgestellt, dass mit hoher Effektivität über eine einfache Heizeinrichtung die Löslichkeit eines ansonsten schwer löslichen Phosphats oder Silikats derart heraufgesetzt werden kann, dass eine hinreichende Abgabe von Silizium und/oder Phosphat auf einfache Weise über die gesamte Lebensdauer der Vorrichtung möglich ist.

So kann insbesondere zum Korrosionsschutz und/oder zum Kalkschutz Silikat und/oder Phosphat an das Wasser abgegeben werden.

Gleichzeitig wird das Filterbett thermisch sanitisiert und somit vor Verkeimung geschützt.

Über die Heizeinrichtung wird der Feststoff in der Kartusche sowie das umgebende Wasser erwärmt. Die Heizeinrichtung kann beispielsweise als Heizwendel ausgebildet sein, welcher sich um die Kartusche erstreckt. Die Heizung kann innerhalb der Schüttung oder außerhalb, z.B. als Wandheizung und somit nicht mediumsberührt ausgeführt sein.

Weiter kann strömungsseitig vor der Kartusche ein Durchlauferhitzer oder ein Boiler angeordnet sein, welcher das Wasser vor dem Einströmen in die Kartusche erwärmt und so über das Wasser den Feststoff in der Kartusche ebenfalls erwärmt.

Schließlich kann die Heizung auch als Hochfrequenzheizeinrichtung ausgebildet sein. Es kann sich dabei insbesondere um eine in oder an der Kartusche angeordnete Hochfrequenzantenne handeln, über die das Wasser in der Kartusche erwärmt wird.

Eine weitere Möglichkeit der Heizungsausführung ist die Anordnung von mindestens zwei Elektroden innerhalb der Schüttung, welche mit Wechselspannung bzw. Wechselstrom betrieben werden. Die Frequenz sollte dabei > 50 Hz betragen. Als Elektrodenmaterial kann Edelstahl, Titan oder Graphit verwendet werden.

Das Phosphat und/oder Silikat ist vorzugsweise als Granulat ausgebildet. Insbesondere wir ein Granulat mit einer mittleren Korngröße von 0,5 bis 3 mm verwendet.

Das Phosphat und/oder Silikat ist gemäß einer Ausführungsform schwer löslich, insbesondere hat es bei 25°C eine Löslichkeit von unter 500 mg/l, vorzugsweise eine Löslichkeit von 20 bis 250 mg/l.

Das Phosphat kann z.B. ein Ortho-Phosphat und/oder Polyphosphat sein.

Als Phosphat wird insbesondere ein Polyphosphat verwendet. Es kann sich insbesondere um ein Phosphat mit einer mittleren Kettenlänge von über 100 handeln. Es kann sich sowohl um ein Natrium-, Calcium- als auch um ein Magnesiumphosphat handeln bzw. ein mit Calcium und/oder Magnesium stabilisiertes Natriumphosphat. Polyphosphate werden vor allem für den Kalkschutz und die Verhinderung der Steinbildung eingesetzt.

Die Vorrichtung kann auch Silikate und Orthophosphate für den Korrosionsschutz umfassen.

Eine Mischung aus Orthophosphat und Polyphosphat oder Silikat und Polyphosphat dient bei einer Ausführungsform der Erfindung zum Korrosionsschutz und zum Kalkschutz.

Das Silikat ist vorzugsweise als amorphes Siliziumoxid ausgebildet. Dieses gilt als praktisch unlöslich im Wasser. Durch die Temperaturerhöhung sowie durch das Vorliegen als Granulat wird dennoch eine hinreichende Löslichkeit erreicht.

Die Heizeinrichtung ist vorzugsweise derart ausgebildet, dass das Phosphat oder Silikat auf eine Temperatur von mindestens 40°C, insbesondere von 40 bis 90 °C, vorzugsweise von 60 bis 80°C, erwärmt wird. Die Heizeinrichtung umfasst vorzugsweise einen Thermostat, über den die Temperatur geregelt wird.

Die Erwärmung kann, wie vorstehend ausgeführt, durch eine beheizbare Kartusche oder durch das Zuführen von erwärmtem Warmwasser erfolgen.

Im Falle einer beheizbaren Kartusche kann die Beheizung permanent oder in zeitlichen Intervallen durchgeführt werden.

Die in der Kartusche vorhandenen Granulate werden thermisch sanitisiert. Insbesondere bei Phosphaten besteht die Gefahr der Verkeimung. Das mikrobiologische Wachstum kann durch die thermische und somit chemiefreie Desinfektion der Kartusche verhindert werden, insbesondere bei Temperaturen > 65 °C.

Die Kartusche ist vorzugsweise von der Heizeinrichtung abnehmbar. Wenn sich die Feststoffe in der Kartusche aufgelöst haben, braucht also lediglich die Kartusche, nicht aber die Heizeinrichtung ausgetauscht zu werden.

Die Erfindung betrifft des Weiteren ein Installationssystem, welche die vorstehend beschriebene Vorrichtung umfasst.

Insbesondere zum Kalkschutz kann die Vorrichtung strömungsseitig vor einem Warmwasserbereiter angeordnet sein.

Der Warmwasserbereiter wird so vor Korrosion und Kesselsteinbildung geschützt.

Bei einer Ausführungsform der Erfindung wird das vom Warmwasserbereiter erwärmte Wasser zum Erwärmen des Silikats- und/oder Phosphats verwendet.

Hierzu kann z.B. das Wasser aus dem Rücklauf über die Vorrichtung strömen, z.B. über eine Heizschlange, die sich um eine mit Silikat und/oder Phosphat befüllte Kartusche erstreckt.

Die Erfindung betrifft des Weiteren ein Verfahren zur Wasserbehandlung, insbesondere unter Verwendung vorstehend beschriebener Vorrichtung.

Das zu behandelnde Wasser wird über ein Filterbett mit einem Phosphat oder Silikat geleitet, welches auf eine Temperatur zwischen 40 und 90°C, vorzugsweise zwischen 60 und 80°C, erwärmt wird.

So kann das Wasser auf eine Phosphatkonzentration von 0,1 bis 3 g/m³ eingestellt werden.

Die Silikatkonzentration kann auf 0,5 bis 15 g/m³, vorzugsweise auf eine Konzentration von 1 bis 12 g/m³, eingestellt werden.

### Kurzbeschreibung der Zeichnungen

Der Gegenstand der Erfindung soll im Folgenden bezugnehmend auf die schematischen Darstellungen gemäß Fig. 1 bis Fig. 3 näher erläutert werden.
Fig. 1 und Fig. 2 sind schematische Darstellungen erfindungsgemäßer Vorrichtungen zur Wasserbehandlung.
Fig. 3 zeigt ein Installationssystem mit einer Vorrichtung zur Wasserbehandlung.

### Detaillierte Beschreibung der Zeichnungen

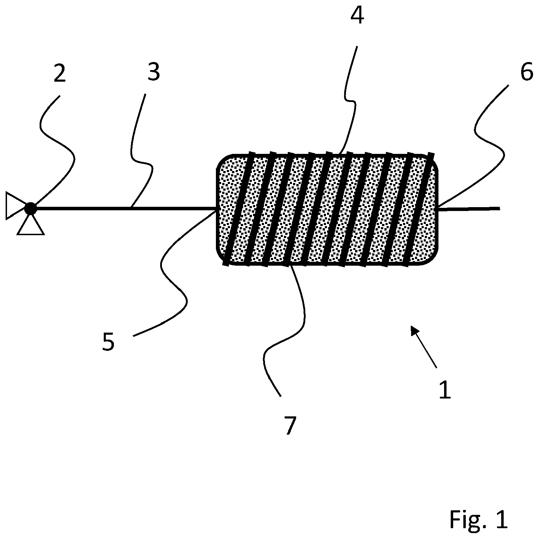

Fig. 1 zeigt eine Vorrichtung 1 zur Wasserbehandlung.

Die Vorrichtung zur Wasserbehandlung umfasst eine Kartusche 4 mit einem Eingang 5 und einem Ausgang 6.

Der bauseitige Wasseranschluss 2 ist über die Leitung 3 mit der Kartusche 4 verbunden.

Die Kartusche ist mit einem Phosphat- oder Silikatgranulat oder einer Mischung davon befüllt.

Über eine sich um die Kartusche 4 erstreckende Heizwendel 7 wird die Kartusche auf 4 und damit das in der Kartusche vorhandene Silikat und/oder Phosphat auf eine Temperatur von etwa 70°C erwärmt.

Dies erhöht derart die Löslichkeit, dass trotz schwer löslicher Feststoffe eine hinreichende Silikat- und/oder Phosphatabgabe möglich ist.

Durch die Beheizung wird gleichzeitig ein zusätzlicher Keimschutz erzielt, was insbesondere bei der Verwendung der Kartusche 4 für ein Phosphat von großem Vorteil ist.

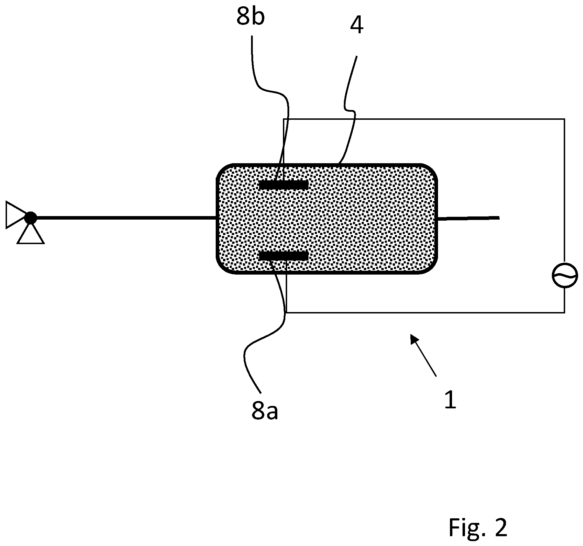

Fig. 2 zeigt eine alternative Ausführungsform einer Vorrichtung 1 zur Wasserbehandlung.

Zum Erwärmen der Kartusche sind gemäß dieser Ausführungsform zwei gegenüberliegende Elektroden 8a, 8b vorgesehen. Die Elektroden 8a, 8b können z.B. aus Grafit ausgebildet sein.

An den Elektroden 8a, 8b kann eine Wechselspannung von 30-50 V angelegt sein. Durch den Widerstand erwärmt sich das Wasser und das Filterbett.

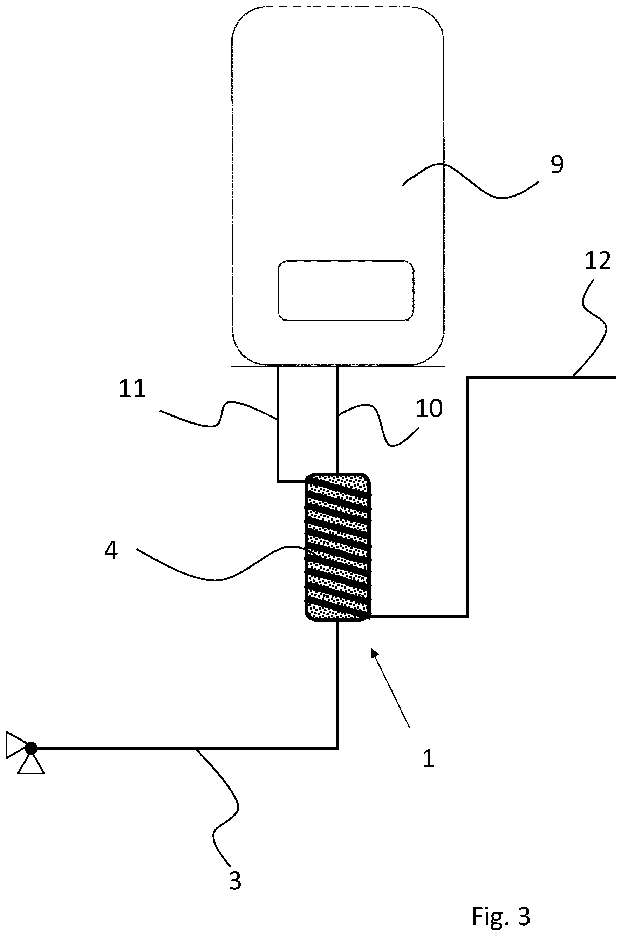

Fig. 3 zeigt eine Ausführungsform der Erfindung, bei der die Vorrichtung 1 zur Wasserbehandlung eine mit Silikat und/oder Phosphat befüllte Kartusche 4 strömungsseitig vor einem Warmwasserbereiter 9 angeordnet ist.

Der Warmwasserbereiter 9 kann z.B. als Gas- oder Elektroboiler oder als Durchlauferhitzer ausgebildet sein.

Über die Leitung 3 fließt das Wasser durch die Kartusche zum Vorlauf 10 des Warmwasserbereiters 9.

Der Warmwasserbereiter wird zum Erwärmen der Kartusche 4 verwendet. So ist ein zusätzliches Heizgerät nur für die Kartusche nicht erforderlich.

In diesem Ausführungsbeispiel ist der Rücklauf 11 des Warmwasserbereiters über die Kartusche 4 geführt.

Hierzu kann sich z.B. eine Heizschlage um die Kartusche 4 erstrecken.

Das zur Warmwasserleitung 12 laufende Wasser erwärmt die Kartusche 4, so dass insbesondere während der Warmwasserbereiter 9 in Betrieb ist, die Löslichkeit von Silikat- und/oder Phosphat erhöht wird.

Korrosion und/oder Kesselsteinbildung im Warmwasserbereiter werden reduziert.

Durch die Erfindung konnte auf einfache Weise die Abgabe von Silizium und/oder Phosphat für zu behandelndes Eingangswasser verbessert werden.

## Patentansprüche

1. Vorrichtung zur Wasserbehandlung, insbesondere zur Anreicherung von Wasser mit Silizium und/oder Dosierung von Phosphat, umfassend eine Kartusche mit einem Eingang und einem Ausgang, welche mit einem Phosphat und/oder Silikat befüllt ist,
wobei die Vorrichtung eine Heizeinrichtung zum Erwärmen des Phosphats oder Silikats umfasst.

2. Vorrichtung nach dem vorstehenden Anspruch, **dadurch gekennzeichnet, dass** die Heizeinrichtung als sich um die Kartusche erstreckendes Heizwendel, als HochfrequenzHeizung oder als strömungsseitig vor der Kartusche angeordneter Durchlauferhitzer angeordnet ist.

3. Vorrichtung nach einem der vorstehenden Ansprüche, **dadurch gekennzeichnet, dass** das Phosphat oder Silikat als Granulat ausgebildet ist, insbesondere mit einer mittleren Korngröße von 0,5 bis 3,0 mm.

4. Vorrichtung nach einem der vorstehenden Ansprüche, **dadurch gekennzeichnet, dass** die Heizeinrichtung mit dem Granulat in Kontakt ist oder im Zulauf zur Kartusche angeordnet ist.

5. Vorrichtung nach einem der vorstehenden Ansprüche, **dadurch gekennzeichnet, dass** das Phosphat und/oder das Silikat eine Löslichkeit bei 25 °C von unter 500 mg/l, vorzugsweise zwischen 20 und 250 mg/l hat.

6. Vorrichtung nach einem der vorstehenden Ansprüche, **dadurch gekennzeichnet, dass** das Phosphat als Polyphosphat und/oder das Silikat als Siliziumdioxid ausgebildet ist.

7. Vorrichtung nach einem der vorstehenden Ansprüche, **dadurch gekennzeichnet, dass** die Heizeinrichtung ausgebildet ist, dass Phosphat und/oder Silikat auf eine Temperatur von mindestens 60 °C, insbesondere von 60 - 80 °C zu erwärmen.

8. Vorrichtung nach einem der vorstehenden Ansprüche, **dadurch gekennzeichnet, dass** das Phosphat oder Silikat in einer austauschbaren Kartusche angeordnet ist.

9. Installationssystem, umfassend eine Vorrichtung nach einem der vorstehenden Ansprüche.

10. Installationssystem nach dem vorstehenden Anspruch, **dadurch gekennzeichnet, dass** die Vorrichtung strömungsseitig vor einem Warmwasserbereiter angeordnet ist.

11. Verfahren zur Wasserbehandlung, insbesondere unter Verwendung einer Vorrichtung nach einem der vorstehenden Ansprüche, wobei das zu behandelnde Wasser über ein Filterbett mit einem Phosphat und/oder Silikat geleitet wird, welches auf eine Temperatur zwischen 50 und 90 °C, vorzugsweise zwischen 60 und 80 °C erwärmt wird.

12. Verfahren nach dem vorstehenden Anspruch, **dadurch gekennzeichnet, dass** das Wasser auf eine Phosphatkonzentration von 0,1 bis 3,0 g/m³ eingestellt wird,
und/oder dass das Wasser auf eine Silikatkonzentration von 0,5 bis 15 g/m³, vorzugsweise von 1 bis 12 g/m³, eingestellt wird.
